# EUROPEAN PATENT APPLICATION

(11) **EP 3 632 718 A1**
(43) Date of publication of application: **08.04.2020**
(21) Application number: 18198099.6
(22) Date of filing: 02.10.2018
(51) Int. Cl.: B60H 1/00, C08L 19/00, C08L 23/16

(54) **HVAC SEALING MEMBER, VEHICLES COMPRISING THE SAME AND RELATED METHODS AND USES**

(71) Applicant: NITTO BELGIUM N.V, 3600 Genk (BE)
(72) Inventor: PARLOO, Eli, 3600 Genk (BE); MACKIE, David, 3600 Genk (BE)
(74) Representative: Grünecker Patent- und Rechtsanwälte PartG mbB

(57) **Abstract**

The present invention discloses a sealing member for an automotive HVAC unit, formed by compounding a mixture comprising an elastomeric material and a thermoplastic elastomer (TPE). The sealing member combines excellent sound damping and water sealing properties over a wide range of compression and deformation conditions, favorable aging properties, and enables recyclability, simple and inexpensive manufacture and easy installation. In further aspects, a method of manufacturing the aforementioned sealing member for an automotive HVAC unit, a vehicle comprising said sealing member between a vehicle firewall and a HVAC unit, and the use of said sealing member between a firewall and a HVAC unit of a vehicle for noise reduction and sealing against ingress of liquids and gases are described.

## Description

### FIELD OF INVENTION

This invention relates to a sealing member for automotive HVAC (heating, ventilation and air conditioning) units, which seals the connection between a vehicle firewall and the HVAC unit against ingress of liquids and gases and simultaneously blocks noise from the engine compartment.

The invention further relates to a vehicle comprising said sealing member, to uses of the same and to its method of manufacturing.

### BACKGROUND OF THE INVENTION

Automotive HVAC units generally comprise connector pipes for transporting heat exchanger fluids between the vehicle interior and the engine compartment. The connector pipes are positioned in through-openings of the vehicle firewall and must be sealed to effectively reduce the engine noise perceived in the passenger compartment and in order to avoid ingress of gases, fumes and liquids (e.g. splash water), which is typically achieved by sealing members comprising one or more openings for the protruding connector pipes and additional lip portions at the outer perimeter of the sealing member, as shown in EP 1 512 614 A1, for example.

In addition to the acoustic and moisture sealing functions, suitable sealing assemblies should must compensate for dimensional tolerances of the automotive parts (bulkhead and cockpit assembly, body-in-white, etc.). For instance, the typical mounting and fabrication tolerance between a body-in-white and a HVAC assembly may be ± 3.5 mm or even more. Therefore, designing and selecting suitable materials for the preparation of sealing assemblies which meet the desired requirements remains challenging.

For instance, EP 1 535 771 A1 discloses a specific mounting arrangement for heater pipe seals using a foamed composition as noise abating material. US 6,682,119 B1 discloses a sealing device essentially comprising a soundproofing coating consisting of a lightweight polyurethane foam. However, the manufacturing of foamed seals is relatively elaborate and expensive, and their sound blocking properties still leave room for improvement. Moreover, foamed materials are prone to shrinkage and/or brittleness during long-term use and may thus lead to ingress of water even upon impregnation or coating with specialized waterproof layers.

Efforts have been made to combine different materials and/or structural components to overcome these disadvantages. For example, US 2011/0127730 A1 discloses a configuration with two seal components having different properties, such as polyurethane foam and natural or synthetic rubber. US 2015/0021858 A1 discloses a bulkhead sealing assembly comprising a sealing-function group, a tolerance compensation member, and a receiving member, for which different material combinations are proposed, including polyurethane foams, polyolefins, and one or more elastomeric materials and/or a spring configuration. While such sealing assemblies favourably combine advantageous physical properties, they tend to be difficult to produce.

Moreover, from the environmental standpoint, it would be further desirable, to provide a HVAC seal which may be easily and ideally fully recycled (e.g. before vehicle scrappage).

In view of the above, there exists a need to provide a HVAC sealing member which simultaneously exhibits excellent sound damping properties, effectively functions as moisture and gas barrier, and enables simple manufacture and recycling.

### SUMMARY OF THE INVENTION

The present invention solves these objects with the subject matter of the claims as defined herein. Further advantages of the present invention will be explained in detail in the section below.

This invention describes a sealing member for an automotive HVAC unit, wherein the sealing member has a uniform composition formed by compounding a mixture comprising an elastomeric material and a thermoplastic elastomer (TPE), and wherein an optional adhesive layer and/or an optional polyolefin layer may be attached to the uniform composition. In an alternative embodiment of the present invention, the sealing member has multiple sections, wherein each of the multiple sections are formed by compounding a mixture comprising an elastomeric material and a thermoplastic elastomer (TPE), wherein the thermoplastic elastomer (TPE) in each section may be identical or different, and wherein an optional adhesive layer and/or an optional polyolefin layer may be attached to one or more of the multiple sections. It has been found that said sealing members enable superior noise blocking performance and improved moisture and gas barrier properties when compared to conventional foamed materials, while being sufficiently flexible to compensate for dimensional tolerances of the automotive parts and to facilitate mounting on the firewall or bulkhead. Moreover, the sealing members exhibit highly stable aging properties (i.e. high dimensional stability, very low brittleness and no water-uptake over prolonged periods). Also, the use of compounded mixtures of elastomeric material and thermoplastic elastomer (TPE) ensures recyclability.

In further aspects, the present invention relates to a method of manufacturing the aforementioned sealing member for an automotive HVAC unit, to a vehicle comprising said sealing member between a vehicle firewall and a HVAC unit, and to the use of said sealing member between a firewall and a HVAC unit of a vehicle for noise reduction and sealing against ingress of liquids.

Preferred embodiments of the present invention and other related aspects are described in the following description and the claims.

### BRIEF DESCRIPTION OF THE DRAWINGS

The accompanying drawings, which are incorporated in and constitute a part of the specification, are illustrative only and, together with the description thereof, serve to explain the principles of the invention without limiting the same.
Figures 1A to 1D illustrate exemplary steps of mounting a HVAC seal between a HVAC unit and the opening of a firewall.
Fig. 2 depicts the exemplary shape of a HVAC seal in a close-up view.
Fig. 3A shows a cross-section of the sealing member according to Fig. 2 along the axis A-A.
Fig. 3B illustrates a cross-section of a preferred seal design according to the present invention.
Fig. 3C illustrates a cross-section of a seal as used in Example 1 of the present invention.
Fig. 3D illustrates a bird's eye view of the seal according to Fig. 3C.
Figures 3E and 3F illustrate cross-sections of alternatively preferred seal designs according to the present invention.
Fig. 4A shows the sound damping performance of Example 1 in dependence of the frequency.
Fig. 4B shows the frequency-dependent sound damping performance of Comparative Example 1.

### DETAILED DESCRIPTION OF THE INVENTION

For a more complete understanding of the present invention, reference is now made to the following description of the illustrative embodiments thereof:

As first embodiment of the present invention, a sealing member for an automotive HVAC unit will be described.

In one embodiment, the present invention relates to a sealing member for an automotive HVAC unit, wherein the sealing member has a uniform composition formed by compounding a mixture comprising an elastomeric material and a thermoplastic elastomer (TPE), and wherein an optional adhesive layer and/or an optional polyolefin layer may be attached to the uniform composition. The wording "uniform composition" as used herein, denotes a material consisting of a single, homogeneous phase, as opposed to multilayer compositions or compositions with multiple, visually distinguishable components conventionally used in the art.

In an alternative embodiment of the present invention, the HVAC sealing member has multiple sections, wherein each of the multiple sections are formed by compounding a mixture comprising an elastomeric material and a thermoplastic elastomer (TPE), wherein the thermoplastic elastomer (TPE) in each section may be identical or different, and wherein an optional adhesive layer and/or an optional polyolefin layer may be attached to one or more of the multiple sections. In this case, the elastomeric material and the thermoplastic elastomer (TPE) used for each of the multiple sections may be identical or different, for example if additional functionalities are desired. For instance, a combination of different thermoplastic elastomers may be used to create relatively flexible sealing lip sections and a less flexible central sections.

For the preparation of the uniform composition and each of the multiple sections, one or more elastomeric material(s) and one or more thermoplastic elastomer(s) (TPE) are compounded, with our without further additives, which will be further described in the following.

In the compounding mixture, the content of elastomeric material is preferably 20 to 95% by weight, further preferably 60 to 92% by weight, such as 65 to 90% by weight, based on the total weight of the mixture. In general, it is preferred that the elastomeric material is ground (e.g. by cryogenic grinding) to a powder with a preferred average particle size between 50 and 700 µm before being compounded with the thermoplastic elastomer(s).

Examples of elastomeric materials include, but are not limited to olefin-diene rubbers, styrene-butadiene rubbers, natural rubbers and mixtures thereof. Preferred embodiments thereof include polyolefin-based elastomers (such as ethylene-propylene rubber (EPR) or ethylene propylene diene monomer (EPDM) rubber, for example). In a particularly preferred embodiment, the elastomeric material is vulcanized recycled rubber (including rubber material or scrap material from rubber processing). Advantageously, foamed elastomeric materials may likewise be recycled for use in the compounding mixture, preferably after grinding the same to an average particle size of 700 µm or less, more preferably 400 µm or less, such as 50 to 200 µm, for example. Examples of suitable foamed elastomers include, but are not limited to foamed olefin-diene rubbers. As specific examples thereof, foamed ethylene-propylene terpolymer (EPT) rubber or foamed ethylene propylene diene monomer (EPDM) rubber may be mentioned.

The content of thermoplastic elastomer (TPE) added to the compounding mixture is preferably 5 to 80% by weight, further preferably 8 to 40% by weight, such as 10 to 35% by weight, each relative to the total weight of the mixture.

The thermoplastic elastomer (TPE) may be suitably selected by the skilled artisan in dependence of the desired physical properties (taking also into account the geometry and dimensions of the resulting sealing member) and in view of the chemical compatibility with the used elastomer. Preferably, the TPE used for the uniform composition or each of the multiple sections is compounded from a mixture comprising an elastomeric component at a content of 60 to 98% by weight and a thermoplastic component at a content of 2 to 40% by weight based on the total weight of the thermoplastic elastomer. Further preferably, the TPE compounded from a mixture comprising an elastomeric component at a content of 70 to 97% by weight, preferably at a content of 70 to 95% by weight, and a thermoplastic component at a content of 3 to 30% by weight, preferably at a content of 5 to 30% by weight based on the total weight of the TPE. The elastomeric component which may be compounded with the thermoplastic component to produce the TPE may be selected from synthetic and natural rubbers. The thermoplastic component is not particularly limited and may include, but is not limited to, polystyrene, poly(methyl methacrylate), acrylonitrile butadiene styrene, polyamide, polybenzimidazole, polycarbonate, polyether sulfone, urethane, polyphenylene oxide, polyphenylene sulfide, polyolefin (e.g. polypropylene), polyvinyl chloride, and fluoropolymer. In especially preferred embodiments, the TPE is selected from one or more thermoplastic elastomers based on copolyamides, polyester elastomers or copolyesters, urethanes, styrene block copolymers, and olefin-based thermoplastic elastomers, and especially preferably from one or more of SBS, SEBS, and PP/EPDM with crosslinked or non-crosslinked EPDM phase.

In order to enhance the elongation at break, the elastomeric material and the TPE may be selected so as to exhibit a similar Shore-A hardness (as may be determined according to DIN 53505). For example, it is preferred that the Shore-A hardness of the elastomer deviates by 20 or less, especially preferably by 10 or less, from the Shore A hardness of the thermoplastic elastomer (TPE), which further facilitates the applicability of the sealing member and additionally improves its water-tightness and conformability.

In the preparation of the uniform composition and each of the multiple sections of the HVAC sealing member, a thermoplastic material different from the thermoplastic component of the thermoplastic elastomer (TPE) may be added to the compounding mixture, preferably at a content of from 0 to 50% by weight, further preferably at a content of from 0 to 30% by weight, based on the total weight of the mixture. Exemplary thermoplasts include, but are not limited to polystyrene, poly(methyl methacrylate), acrylonitrile butadiene styrene, polyamide, polybenzimidazole, polycarbonate, polyether sulfone, urethane, polyphenylene oxide, polyphenylene sulfide, polyolefin (e.g. polypropylene), polyvinyl chloride, and fluoropolymer.

While not being limited thereto, EPMT (elastomeric powder modified thermoplastic, commercially available from Ruhr Compounds GmbH) may be used to prepare the uniform composition and one, several or all of the multiple sections of the sealing member of the present invention.

In an alternatively preferred embodiment, the uniform composition or one, several or all of the multiple sections of the sealing member is formed by compounding a mixture comprising a thermoplastic elastomer and an elastomeric material based on a foamed elastomer.

The compounding mixture may comprise optional additives selected from fillers (e.g. calcium carbonate, silica, carbon black, carbon nanotubes, kaolin, mica, talc, clay, glass fibers, and/or aramid fibers), antioxidants (e.g. radical scavenging antioxidants), nucleating agents (e.g. talc, silica, (poly)carboxylic acid salts), coupling agents, colorants (e.g. inorganic pigments selected from metal oxides, sulfides and/or hydroxides), plasticizing agents (e.g. ester plasticizers), and flame retardants. If present, the total content of said optional additives is preferably 20% by weight or less, further preferably 10% by weight or less based on the total weight of the mixture.

As indicated above, the HVAC sealing member according to the present invention may optionally comprise an adhesive layer. The material used for the optional adhesive layer is not particularly limited and may be suitably selected by the skilled artisan in order to facilitate the attachment of the seal to either the HVAC unit or the bulkhead or firewall. However, in terms of ease of manufacture and improved recyclability, mechanical fixation means may be preferable (e.g. via clamp fit or press fit, by providing the seal with openings for clips or screws, or by forming the seal so as to provide a female (or male) connectors fitted to a male (or female) connector provided in the HVAC unit or the bulkhead).

In some cases, the water sealing properties of the HVAC seal may be improved by incorporating a polyolefin layer, preferably a layer made of polyethylene (PE) or polypropylene (PP). For this purpose, the polyolefin layer is preferably provided on the HVAC side of the seal. If used, the thickness of the polyolefin layer is preferably in the range of from 10 µm to 3 mm, further preferably of from 0.5 mm to 2.5 mm.

The HVAC sealing member according to the present invention preferably does not contain a foamed material. It is noted that this embodiment does not exclude the use of foam-based rubber as elastomeric component, since the same is no longer in a foamed state within the sealing member. In addition, the sealing member according to the present invention further preferably consists of either the uniform composition or the multiple sections as described above. In combination with forming the uniform composition or each of the multiple sections of the sealing member by compounding a mixture comprising an elastomeric material and a thermoplastic elastomer (TPE), the sealing member may be thus produced in a particularly simple and inexpensive manner and exhibits improved noise blocking performance, enhanced airflow resistance, water barrier properties and durability (e.g. resistance to aging, chemical contamination or environmental conditions), especially when compared to foamed HVAC seals. In addition, the used materials result in low VOC, odor emission and flammability (in full compliance with current OEM standard requirements).

While not being limited thereto, the deformation of the HVAC sealing member in compression direction (e.g. thickness direction) upon compression at 300 N is preferably 10% or more and 90% or less, more preferably 20% or more and 85% or less, which may be determined by determining the nominal deformation upon compression with a Zwick mechanical property tester. However, if demanded, the deformation in compression direction may also be suitably adjusted to other ranges (e.g., specific requirements set by the design, position and compositional properties of the sealing member to ensure water-tightness between the HVAC seal and the firewall).

The Shore A hardness of the final HVAC seal is preferably in the range of 30 to 90, and a particularly advantageous balance of flexibility (and thus compensation of manufacturing tolerances) and water-tightness under mounting conditions (e.g. upon application of pressure up to 300 N in thickness direction) is achieved by setting the HVAC seal hardness of between 35 and 89 Shore A (determined according to DIN 53505), in embodiments between 30 and 50 Shore A, which may be achieved by the skilled artisan by selection of the elastomer and TPE constituents.

The physical properties may also be fine-tuned by implementing different design features, examples of which will be described hereinbelow.

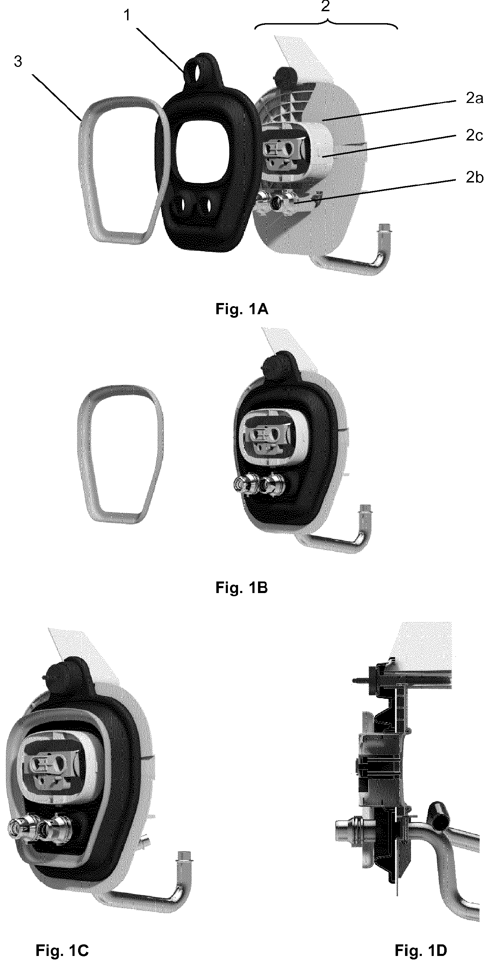

Figures 1A to 1D illustrate exemplary steps of mounting a HVAC seal (1) between the HVAC unit (2) and the opening of a firewall (3). Typically, HVAC assemblies comprise a baseplate (2a), as well as air-conditioning/heating pipes (2b) and an extension valve portion (2c) extending from the surface of the baseplate, to which the shape of the sealing member (2) must be adapted (see Fig. 1A). While not being limited thereto, the sealing member (1) may be mounted onto the HVAC unit (2) (see Fig. 1B) first, optionally by using mechanical fixation means or the optional adhesive layer, followed by installing the assembly onto the firewall opening (3) (see Fig. 1C and its side view in Fig. 1D).

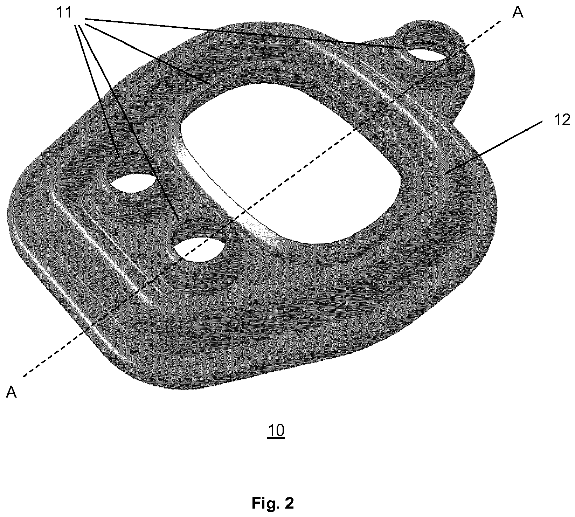

As is illustrated in Fig. 2, effective sealing against the HVAC components (e.g. pipes, extension valve units) extending from the HVAC baseplate may be achieved by providing the sealing member (10) with collar sealing sections (11), whereas sealing against the firewall body panel is effected by a flexible bulge section (12).

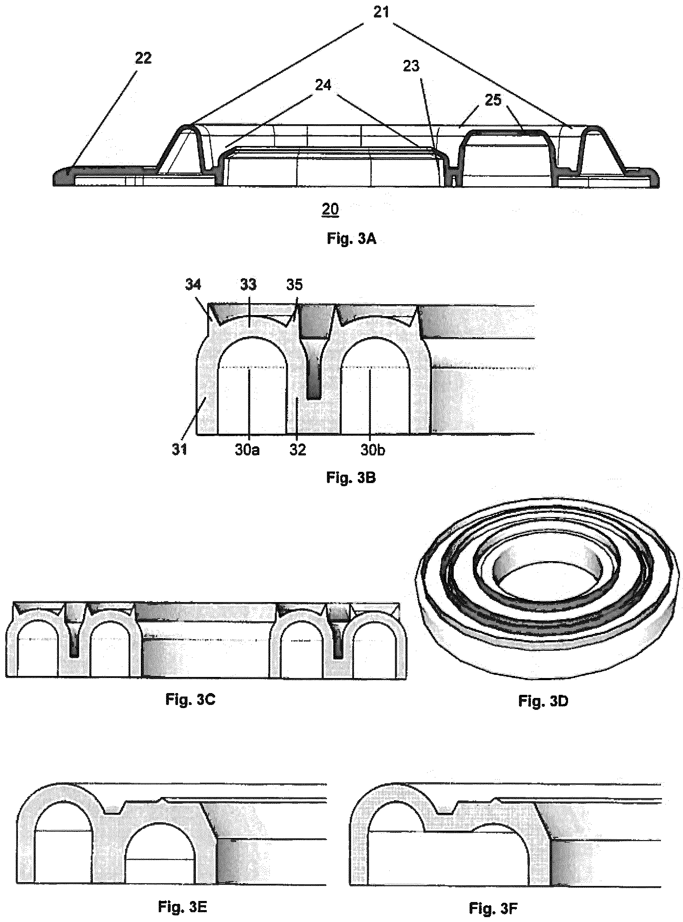

Fig. 3A shows a cross-section of the sealing member according to Fig. 2 along the axis A-A. The sealing member (20) may be provided with multiple design features which enhance the flexibility, sealing properties and the conformability to mounting tolerances. Preferably, the sealing member (20) comprises one or more openings surrounded by inner lip portions (24, 25) which form a sealing collar configured to seal HVAC components protruding the openings, and outer lip portions (22) at the outer perimeter of the sealing member. In combination with the flexible bulge section (21) shaped to conform the firewall opening, the outer lip portion (22) may function as an auxiliary flexible section by providing the same with a hollow cavity (upon mounting to the HVAC baseplate), which may be separate from a cavity of the flexible bulge section (21) or combined with the same (as in Fig. 3A). In addition, flexibility and mechanical strength may be fine-tuned by introducing auxiliary flexible sections comprising an H-shaped cross-section (23).

An especially preferred design feature which enables both excellent flexibility and sealing properties against gases or liquids is shown in Fig. 3B, wherein one or more U-shaped cross-sections (30a, 30b) having a rounded portion (33) between two primary lip sections (31, 32) and one or more secondary lip sections (34, 35) extending from the rounded portion (33) in the direction opposite to the primary lip sections (31, 32) are provided, preferably so that upon mounting, the primary lip sections are in contact with the HVAC baseplate and the secondary lip sections are in contact with the firewall. Such a configuration may be implemented in both the inner and outer sealing sections, and preferably in at least a part of the outer lip portions.

However, the design of HVAC seal according to the present invention is not particularly limited any may be suitably adjusted by incorporating flexible lip sections other than that shown in Fig. 3B. While not being limited thereto, exemplary designs are illustrated in Figure 3E, which shows a cross-section similar to that of Fig. 3B, but without the secondary lip sections extending from the outer rounded portion, and in Fig. 3F, wherein the center rib formed between the two U-shaped cross-sections is removed to further adjust the deformation properties of the HVAC sealing member in compression direction.

By combining these design features with the aforementioned preferred seal compositions, a HVAC seal with particularly favourable acoustic damping performance, gas/liquid sealing properties, and conformability to mounting tolerances may be provided in a simple and inexpensive manner.

In a second embodiment, the present invention relates to a vehicle comprising a sealing member according to the first embodiment between a vehicle firewall and a HVAC unit. Herein, the optional adhesive layer and/or the optional polyolefin layer, if present, may be provided on the firewall side of the sealing member or alternatively on the HVAC side of the sealing member (for example, when HVAC unit is delivered to a car manufacturer with the sealing member already adhered thereto).

A third embodiment of the present invention relates to the use of a sealing member according to the first embodiment between a firewall and a HVAC unit of a vehicle for noise reduction and sealing against ingress of liquids and gases (including fuel, water, exhaust fumes or other gases or liquids emanating from the engine compartment, for example).

While the method of manufacturing the sealing member of the present invention is not particularly limited, a fourth embodiment of the present invention relates to a method of manufacturing a HVAC sealing member according to the first embodiment, comprising the steps of: grinding the elastomeric material to a powder, melt compounding a mixture comprising the elastomeric material powder and a thermoplastic elastomer (TPE); and injection molding the compounded mixture. Grinding may be accomplished by methods known in the art (e.g. by cryogenic grinding) in a single step or in multiple steps, and the resulting powder preferably exhibits an average particle size between 50 and 700 µm (which may be determined by use of a scanning electron microscope (SEM) and a transmission electron microscope (TEM), and is calculated as an average value of particle size of the particles observed in several to several tens of visual fields). The mixture is subjected to a melt compounding process, and is fed into a heated barrel during injection molding, mixed, and forced into a mold cavity, where it cools and hardens to the configuration of the cavity. Alternatively, as circumstances demand, the melt compounding process may be used to prepare pellets first (e.g., for storage or transport), which are injection-molded to the shape of the sealing member in a separate step at a later stage. For the manufacture of HVAC seals consisting of multiple sections, injection molding may be carried out as a multi-component injection molding process (e.g. 2K-molding) including, but not being limited to sequential molding, co-injection, or overmolding, for example. The process of applying the optional adhesive layer and/or the optional polyolefin layer is not particularly limited and may be accomplished by methods known in the art. However, for the sake of simplicity of the production process, it is preferred that the HVAC seal does not comprise the optional layers. Accordingly, the sealing member described above may be manufactured in a procedure comprising only a single or a few steps, which remarkably simplifies the production process when compared to the manufacture of complex multicomponent structures. In addition, using the combination of elastomeric material and thermoplastic elastomers as the main components allows excess material to be recycled or directly reused. In combination, the method of the present invention thus provides a simple, cost-effective and environmentally friendly HVAC seal production process.

It will be understood that the preferred features of the first embodiment may be combined with the second to fourth embodiments in any combination, except for combinations where at least some of the features are mutually exclusive.

### EXAMPLES

### Mechanical Compression Force Testing

In an initial set of model experiments, the mechanical behavior of a HVAC seal according to the present invention has been evaluated in comparison with a foamed HVAC seal. As a simplified design approximation of the HVAC seal shape, circular seals with a height of 20 mm have been prepared. In Comparative Example 1, an EPDM rubber foam with semi-closed cell structure (EE-1000, obtainable from Nitto Denko Corporation) was used to provide a seal in the shape of a solid ring. On the other hand, a sealing member designed according to Figures 3C and 3D, formed by compounding a mixture comprising a vulcanized recycled rubber and a thermoplastic elastomer (TPE), and having a uniform composition and a Shore A hardness of 40 was used in Example 1. The sealing samples have been subjected to a compression test by using a Zwick mechanical property tester (test speed of 10 mm/min with 5 N pre-load (zero'd deflection)) and measuring the deflection (i.e. nominal deformation in mm) of the samples during increase of the compression force to 350 N. The results of the measurement are shown in Table 1, which demonstrates that a seal according to the present invention exhibits favourable deflection properties upon compression, enabling good conformability to design and mounting tolerances.

**TABLE 1**

| Compression Force [N] | Nominal Deformation in Thickness Direction [mm] | |
|---|---|---|
| | Example 1 | Comparative Example 1 |
| 100 | 7.0 | 13.5 |
| 200 | 15.0 | 15.0 |
| 300 | 19.1 | 16.3 |
| 350 | 21.3 | 16.5 |

### Acoustic Blocking Properties

The acoustic sealing properties of a HVAC seal according to the present invention have been evaluated by mounting the model seals of Example 1 and Comparative Example 1 have been mounted between a closed plate and a plate having an opening positioned at the hole of the ring-shaped seal and measuring the frequency-dependent sound pressure levels in open condition and under compression (300 N in thickness direction).

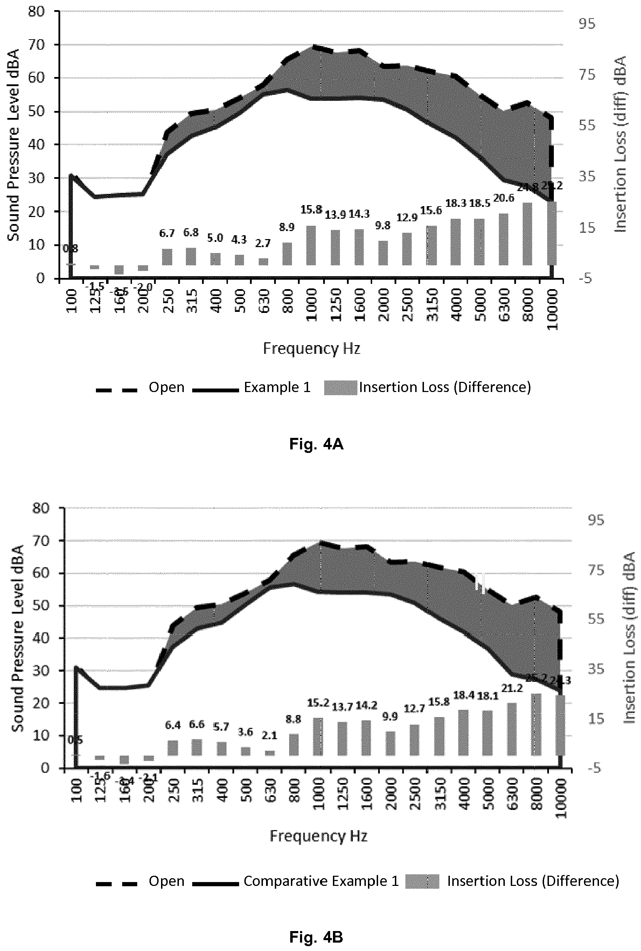

The results of the sound blocking performance are shown in Figures 4A (Example 1) and Fig. 4B (Comparative Example 1). As is demonstrated by the diagrams, at the 300N compression point, the acoustic damping of the seal according to Example 1 is slightly improved when compared the foamed seal according to Comparative Example 1, particularly at the frequency range of 500 to 800 Hz which is of specific importance for engine noise blocking purposes.

### Water Sealing Performance

In a further experiment, the water sealing performance under compression has been evaluated by mounting the model seals of Example 1 and Comparative Example 1 vertically between a closed plate (functioning as a firewall lip test piece) and a plate having an opening positioned at the hole of the ring-shaped seal and compressing each sample to a deformation corresponding to 300 N in thickness direction. While directing a jet of water with constant pressure at the opening, the compression force was slowly reduced until a water leak between the seal and the closed plate was observed. In addition to the aforementioned exemplary seals, an additional seal in the shape of a solid ring made of an EPDM rubber foam with semi-closed cell structure (EE-1000, obtainable from Nitto Denko Corporation) and a 2 mm thick polyethylene (PE) layer (total thickness 22 mm) positioned at the plate having the opening has been prepared and tested in Comparative Example 2. The relevant results of the measurements are shown in Table 2 below.

**TABLE 2**

| Seal Sample | Initial compression [%] (corresponding to compression at 300 N) | Compression at leak [%] | Delta % compression | Deformation difference between initial compression and leak point [mm] |
|---|---|---|---|---|
| Example 1 | 63.3 | 16.6 | 46.7 | 14 |
| Comparative Example 1 | 84.2 | 68.4 | 15.8 | 3 |
| Comparative Example 2 | 85.7 | 59.5 | 26.2 | 5.5 |

The comparison of the Delta % compression (= initial compression [%] - compression at leak [%]) values in Table 2 demonstrates that the seal according to Example 1 maintains the water sealing ability over a significantly wider compression range when compared to Comparative Examples 1 and 2. In addition, it is shown that the water sealing performance of Example 1 is maintained even under low compression and low deformation conditions.

In summary, the above results indicate that HVAC seals in accordance to the present invention exhibit a sufficient flexibility to compensate for typical mounting and production tolerances between a body-in-white and a HVAC assembly and maintain excellent acoustic blocking and liquid barrier properties, both at the maximum compression force applied during HVAC mounting and at low compression conditions.

Once given the above disclosure, many other features, modifications, and improvements will become apparent to the skilled artisan.

### REFERENCE NUMERALS

- 1, 10, 20:: sealing member
- 2:: HVAC unit
- 2a:: HVAC baseplate
- 2b:: air-conditioning/heating pipes
- 2c:: HVAC expansion valve portion
- 3:: firewall opening
- 11:: collar sealing section for sealing against HVAC components
- 12, 21:: flexible bulge section for sealing against body panel
- 22:: auxiliary flexible section with outer lip portion
- 23:: auxiliary flexible section with H-shaped cross-section
- 24, 25:: inner lip portions
- 30a/30b:: outer/inner lip portions with U-shaped cross-section
- 31, 32:: primary lip sections
- 33:: rounded portion
- 34, 35:: secondary lip sections

## Claims

1. Sealing member for an automotive HVAC unit, wherein the sealing member has a uniform composition formed by compounding a mixture comprising an elastomeric material and a thermoplastic elastomer (TPE), and wherein an optional adhesive layer and/or an optional polyolefin layer may be attached to the uniform composition.

2. Sealing member for an automotive HVAC unit, wherein the sealing member has multiple sections, wherein each of the multiple sections are formed by compounding a mixture comprising an elastomeric material and a thermoplastic elastomer (TPE), wherein the thermoplastic elastomer (TPE) in each section may be identical or different, and wherein an optional adhesive layer and/or an optional polyolefin layer may be attached to one or more of the multiple sections.

3. The sealing member according to claim 1 or 2, wherein the mixture consists of one or more elastomeric material(s) and one or more thermoplastic elastomer(s) (TPE).

4. The sealing member according to any of the preceding claims, wherein the content of elastomeric material is 20 to 95% by weight, preferably 60 to 92% by weight, based on the total weight of the mixture.

5. The sealing member according to any of the preceding claims, wherein the elastomeric material is selected from olefin-diene rubbers, styrene-butadiene rubbers, natural rubbers and mixtures thereof; wherein the elastomeric material is vulcanized recycled rubber, and/or wherein the elastomeric material is based on foamed rubber.

6. The sealing member according to any of the preceding claims, wherein the content of thermoplastic elastomer (TPE) is 5 to 80% by weight, preferably 8 to 40% by weight, based on the total weight of the mixture.

7. The sealing member according to any of the preceding claims, wherein the thermoplastic elastomer (TPE) is selected from one or more thermoplastic elastomers based on copolyamides, polyester elastomers or copolyesters, urethanes, styrene block copolymers, and olefin-based thermoplastic elastomers, and preferably from one or more of SBS, SEBS, and PP/EPDM with crosslinked or non-crosslinked EPDM phase.

8. The sealing member according to any of the preceding claims, wherein the mixture comprises a thermoplastic material different from the thermoplastic component of the thermoplastic elastomer (TPE).

9. The sealing member according to any of the preceding claims, comprising a polyolefin layer having a thickness in the range of from 10 µm to 3 mm, preferably of from 0.5 mm to 2.5 mm.

10. The sealing member according to any of the preceding claims, wherein the deformation of the sealing member in compression direction upon compression at 300 N is 25% or more, and/or wherein the Shore A hardness of the sealing member is in the range of 30 to 90.

11. The sealing member according to any of the preceding claims, comprising:
one or more openings surrounded by inner lip portions configured to seal HVAC components protruding the openings, and
outer lip portions at the outer perimeter of the sealing member.

12. The sealing member according to claim 11, wherein at least a part of the outer lip portions exhibits a U-shaped cross-section having a rounded portion between two primary lip sections, and one or more secondary lip sections extending from the rounded portion in the direction opposite to the primary lip sections.

13. Method of manufacturing a sealing member for an automotive HVAC unit according to any of claims 1 to 12, comprising the steps of: grinding the elastomeric material to a powder, melt compounding a mixture comprising the elastomeric material powder and a thermoplastic elastomer (TPE), and injection molding the compounded mixture into the shape of the sealing member or into a pellet shape, which is subsequently injection-molded into the shape of the sealing member in a separate step.

14. Vehicle comprising a sealing member according to any of claims 1 to 12 between a vehicle firewall and a HVAC unit, wherein the optional adhesive layer and/or the optional polyolefin layer, if present, is provided on the HVAC side or the firewall side of the sealing member.

15. Use of a sealing member according to claims 1 to 12 between a firewall and a HVAC unit of a vehicle for noise reduction and sealing against ingress of liquids and gases.
